# NEUE EUROPÄISCHE PATENTSCHRIFT

(11) **EP 2 097 625 B2**
(45) Veröffentlichungstag und Bekanntmachung des Hinweises auf die Entscheidung über den Einspruch: **14.01.2015**
(45) Hinweis auf die Patenterteilung: 26.05.2010
(21) Anmeldenummer: 07846720.6
(22) Anmeldetag: 21.11.2007
(51) Int. Cl.: F01N 3/20, B01F 5/04

(54) **MISCHELEMENT SOWIE ABGASANLAGE FÜR EINE VERBRENNUNGSKRAFTMASCHINE**
MIXING ELEMENT AND EXHAUST SYSTEM FOR AN INTERNAL COMBUSTION ENGINE
ÉLÉMENT MÉLANGEUR ET SYSTÈME D'ÉCHAPPEMENT POUR UN MOTEUR À COMBUSTION INTERNE

(30) Priorität: 22.11.2006 DE 102006055036
(43) Veröffentlichungstag der Anmeldung: 09.09.2009
(73) Patentinhaber: Faurecia Emissions Control Technologies, Germany GmbH, 86154 Augsburg (DE)
(72) Erfinder: KAISER, Rolf, 86150 Augsburg (DE); RUSCH, Klaus, 86368 Gersthofen (DE); STADLER, Florian, 85049 Ingolstadt (DE)
(74) Vertreter: Prinz & Partner mbB
(86) Internationale Anmeldenummer: PCT/EP2007/010087
(87) Internationale Veröffentlichungsnummer: WO 2008/061734

(56) Entgegenhaltungen:
- EP-A- 1 424 488
- EP-A- 1 712 756
- DE-A1- 10 123 358
- DE-A1- 19 741 199
- DE-C2- 4 313 393

## Beschreibung

Die Erfindung betrifft ein Mischelement, insbesondere zur Anordnung in einer Abgasanlage einer Verbrennungskraftmaschine, mit einem Gitter, das mehrere zueinander parallele Reihen aufweist, und mehreren vom Gitter abstehenden Ablenkelementen, die gegenüber der Gitterebenen-Normalen geneigt sind, wobei sämtliche Ablenkelemente einer Reihe gleichsinnig geneigt sind. Gemäß einem weiteren Aspekt betrifft die Erfindung ein Mischelement mit einem Gitter, das mehrere zueinander parallele Reihen aufweist, und mehreren vom Gitter abstehenden Ablenkelementen, die gegenüber der Gitterebenen-Normalen geneigt sind, wobei mindestens ein Feld mit gleichsinnig geneigten Ablenkelementen vorgesehen ist, das durch wenigstens vier benachbarte Ablenkelemente gebildet wird. Ein dritter Aspekt der Erfindung sieht ein Mischelement vor, mit einem Gitter, das mehrere zueinander parallele Reihen aufweist, und mehreren vom Gitter abstehenden Ablenkelementen, die gegenüber der Gitterebenen-Normalen geneigt sind. Außerdem betrifft die Erfindung eine Abgasanlage für eine Verbrennungskraftmaschine.

Ein gattungsbildendes Mischelement ist aus der DE 43 13 393 C2 bekannt und dient dazu, ein in eine Rohrleitung eingebrachtes Medium möglichst homogen in einem Strömungsmedium zu verteilen. Insbesondere wird das Mischelement zur Vermischung eines stickoxidhaltigen Abgasstroms mit Ammoniak verwendet. In einem nachgeschalteten DeNOₓ-Katalysator werden die Stickoxide und das Ammoniak nach dem Verfahren der selektiven katalytischen Reduktion katalytisch in Wasser und Stickstoff umgesetzt. Bei dem im Stand der Technik beschriebenen Mischelement sind die Ablenkelemente unmittelbar benachbarter Reihen gegenläufig geneigt sowie zueinander versetzt angeordnet.

Weitere Mischelemente sind aus der DE 197 41 199 A1, EP 1 712 756 A und EP 1 424 488 A bekannt.

Die Erfindung schafft ein Mischelement, das sich gegenüber dem Stand der Technik durch eine verbesserte Vermischung eines eingebrachten Stoffs mit einem Strömungsmedium auszeichnet.

Gemäß der Erfindung wird dies bei einem Mischelement nach Anspruch 1 erreicht. Gemäß der erfindung sind die Ablenkelemente der an die ersten Reihen angrenzenden Reihen zu denen der ersten Reihen gegensinnig geneigt. Entscheidend ist generell, daß mindestens zwei benachbarte Reihen gleichsinnig geneigte Ablenkelemente aufweisen. In Tests hat man völlig überraschend herausgefunden, daß das erfindungsgemäße Mischelement, obwohl die Ablenkelemente der benachbarten ersten Reihen gleich geneigt sind, bessere Vermischwerte erreicht als das Mischelement im Stand der Technik. Ferner ist das Mischelement einfacher herzustellen, denn für das Abkanten der eng aneinanderstehenden Ablenkelemente ist es einfacher, wenn benachbarte Ablenkelemente in die gleiche Richtung gebogen werden können. Durch die Erfindung läßt sich insbesondere eine gleichmäßigere Verteilung eines flüssigen Mediums in einem Gasstrom erreichen. Dies ist vor allem bei einer Abgasanlage einer Verbrennungskraftmaschine mit einem sogenannten SCR-Katalysator von Vorteil, der zur Umwandlung von Stickoxiden Ammoniak benötigt. Zu diesem Zweck wird eine wäßrige Harnstofflösung in die Abgasanlage eingebracht, wobei es entscheidend ist, daß selbst die größten Tropfen der Harnstofflösung stromaufwärts des SCR-Katalysators verdampft und durch Thermolyse in Ammoniakgas umgewandelt werden. Verbleibende Tropfen könnten das Katalysatorsubstrat schädigen oder sich an den kälteren Wänden des abgasdurchströmten Rohres festsetzen. Der abgelagerte Harnstoff kann in Folge abplatzen und den Katalysator beschädigen. Dies wird durch das erfindungsgemäße Mischelement verhindert. Aufgrund ihrer geringen thermisch wirksamen Masse heizen sich die Ablenkelemente im heißen Abgasstrom schnell auf, und kleine Tröpfchen werden verdampft, wenn sie die Oberfläche der Ablenkelemente treffen. Größere Tropfen treffen auf die Oberfläche der Ablenkelemente und bersten aufgrund ihrer hohen kinetischen Energie in viele kleine Tröpfchen, die ebenfalls zuverlässig verdampft werden. Die in der vorliegenden Erfindung beschriebene Ausrichtung der Reihen muß nicht zwingend zu einer ganz exakten Parallelausrichtung führen. Eine leichte Schrägstellung ist durchaus möglich.

Vorzugsweise sind die nebeneinanderliegenden Ablenkelemente der ersten Reihen parallel zueinander ausgerichtet. Hierbei sind unter den nebeneinanderliegenden Ablenkelementen diejenigen zu verstehen, die senkrecht zur Reihenlängsrichtung unmittelbar nebeneinander liegen.

Gemäß einer bevorzugten Ausführungsform der Erfindung handelt es sich bei den ersten Reihen um mittlere Reihen, die besonders stark durchströmt werden.

Alternativ kann es sich bei den ersten Reihen um Reihen handeln, die auf derselben Seite einer parallel zur Reihenlängsrichtung verlaufenden Mittelachse angeordnet, also relativ zur Mittelachse seitlich verschoben sind.

Die Ablenkelemente können in Reihenlängsrichtung geneigt sein.

Ebenso ist es denkbar, daß die Ablenkelemente senkrecht zur Reihenlängsrichtung geneigt sind.

Im letzteren Fall können die freien Enden der Ablenkelemente, je nach gewünschter Strömungsbeeinflussung, zur Mittelachse hin oder von dieser weg zeigen.

Vorzugsweise weist das Gitter genau zwei erste Reihen auf.

Je nach gewünschter Verwirbelung können sämtliche Ablenkelemente einer Reihe den gleichen Neigungswinkel aufweisen.

Eine besonders gleichmäßige Vermischung der Medien läßt sich z.B. dadurch erreichen, daß das Mischelement achsensymmetrisch zu einer parallel zur Reihenlängsrichtung verlaufenden Mittelachse ausgebildet ist.

Der Neigungswinkel der Ablenkelemente sollte zwischen 10° und 60° zur Gitterebenen-Normalen betragen, vorzugsweise etwa 45°. Auf diese Weise wird eine hohe Verwirbelung und damit eine gute Vermischung der Medien erreicht. Gleichzeitig ist der durch ein derart ausgebildetes Mischelement erzeugte Gegendruck im Strömungsmedium vergleichsweise gering.

Eine besonders einfache und damit kostengünstig herstellbare Ausgestaltung ergibt sich dadurch, daß das Gitter durch mehrere flache erste und zweite Stege gebildet ist, wobei die ersten Stege senkrecht zu den zweiten Stegen angeordnet sind.

Vorzugsweise begrenzen die ersten Stege die Reihen, und die Ablenkelemente sind an den zweiten Stegen befestigt. Ebenso können die Ablenkelemente auch an den ersten Reihen befestigt sein, insbesondere bei Ablenkelementen, die senkrecht zur Reihenlängsrichtung geneigt sind.

Geringe Fertigungskosten werden beim erfindungsgemäßen Mischelement dadurch erreicht, daß die ersten und die zweiten Stege ineinander gesteckt und miteinander verschweißt oder verlötet sind.

Die Ablenkelemente können einstückig mit dem Gitter ausgebildet sein. Alternativ sind die Ablenkelemente durch Schweißen oder Löten mit dem Gitter verbunden.

Insbesondere sind die Ablenkelemente (und gegebenenfalls die zugehörigen Stege) als Metallstanzteile ausgebildet.

Eine für die Vermischung der Medien besonders günstige starke Verwirbelung läßt sich erreichen, wenn die Kanten der Ablenkelemente scharfkantig ausgeführt sind, d.h. ohne spanende Nachbearbeitung nach dem Stanzen.

Um den durch das Mischelement erzeugten Gegendruck gering zu halten und gleichzeitig die Bildung von Sekundärwirbeln zu begünstigen, können sich die Ablenkelemente in Richtung vom Gitter weg verjüngen.

Insbesondere sind die Ablenkelemente trapezförmig ausgebildet, wobei die Basis des Trapezes mit dem Gitter verbunden ist.

Die Länge der Ablenkelemente entspricht im wesentlichen der Breite der Reihen oder hat zumindest die gleiche Größenordnung.

Natürlich können die Ablenkelemente im Randbereich des Gitters einen anderen Neigungswinkel als diejenigen im mittleren Bereich aufweisen. Auf diese Weise läßt sich die durch das Mischelement erreichte Vermischung gezielt beeinflussen.

Um die chemische Umsetzung beispielsweise von Harnstofflösung in Ammoniak zu verbessern, können die Ablenkelemente eine katalytisch aktive Beschichtung aufweisen.

Das erfindungsgemäße Mischelement wird vorzugsweise in einer Abgasanlage für eine Verbrennungskraftmaschine eingesetzt, die neben dem oben beschriebenen Mischelement ein abgasdurchströmtes Rohr sowie eine Zuführeinrichtung für ein Reduktionsmittel aufweist. Insbesondere ist das Mischelement stromabwärts der Zuführeinrichtung angeordnet.

Wie sich gezeigt hat, läßt sich eine besonders gute Vermischung des Reduktionsmittels mit dem Abgasstrom dadurch erreichen, daß das Rohr stromaufwärts des Mischelements abgewinkelt ist. Auf diese Weise wird das Abgas unmittelbar stromaufwärts des Mischelements zu einer Richtungsänderung gezwungen. Dies ist jedoch nicht in jedem Anwendungsfall zwingend.

Vorzugsweise ist das Rohr gegenüber der Gitterebenen-Normalen zwischen 15° und 60° abgewinkelt.

Die Zuführung des Reduktionsmittels erfolgt insbesondere unter einem Winkel zwischen 15° und 60° zur Zuströmrichtung des Abgases. Ziel ist hierbei eine vollständige Benetzung aller Ablenkelemente in jedem Betriebspunkt.

Weitere Merkmale und Vorteile der Erfindung ergeben sich aus der nachfolgenden Beschreibung einer bevorzugten Ausführungsform anhand der beigefügten Zeichnungen. In diesen zeigen:
- Figur 1 eine perspektivische Ansicht eines Mischelements gemäß einer ersten Ausführungsform der Erfindung;
- Figur 2 Ansichten eines ersten und eines zweiten Stegs, die das Gitter des Mischelements aus Figur 1 bilden;
- Figur 3 eine Seitenansicht einer erfindungsgemäßen Abgasanlage mit dem Mischelement aus Figur 1;
- Figur 4 eine Draufsicht auf die Abgasanlage aus Figur 3; und
- die Figuren 5 a und b eine Schnittansicht einer gegenüber Figur 3 leicht abgewandelten Abgasanlage bzw. eine Ansicht des Mischelements aus Figur 1;

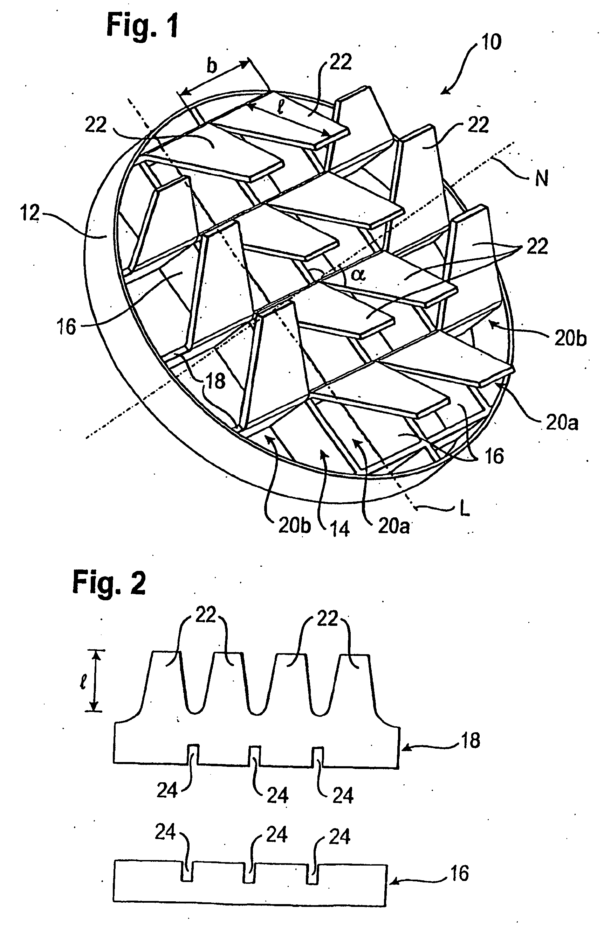

Figur 1 zeigt ein erfindungsgemäßes stationäres Mischelement 10, das ein von einem ringförmigen Rahmen 12 begrenztes Gitter 14 aufweist, das durch mehrere parallel ausgerichtete erste Stege 16 und hierzu senkrecht angeordnete zweite Stege 18 gebildet ist. Die ersten Stege 16 begrenzen mehrere zueinander parallele Reihen 20a, 20b, wobei die beiden äußersten Reihen 20b außenseitig durch den Rahmen 12 selbst begrenzt werden. Natürlich wäre es ebenso möglich, die Reihen 20a, 20b nicht exakt parallel auszubilden.

Vom Gitter 14 stehen mehrere Ablenkelemente 22 ab, die an den zweiten Stegen 18 befestigt sind, insbesondere einstückig mit diesen (und damit mit dem Gitter 14) ausgebildet sind. Die Länge I der Ablenkelemente 22 entspricht im wesentlichen der Breite b der Reihen 20a, 20b.

Zur Herstellung des Mischelements 10 werden die ersten Stege 16 und die zweiten Stege 18 mitsamt den Ablenkelementen 22 als Metallstanzteile gefertigt. Wie aus Figur 2 hervorgeht, weisen sowohl die ersten Stege 16 als auch die zweiten Stege 18 mehrere Schlitze 24 auf, über die die ersten und die zweiten Stege 16 bzw. 18 ineinander gesteckt werden. Anschließend wird das Gitter 14 an den Kreuzungspunkten miteinander verschweißt bzw. verlötet, und der Rahmen 12 wird an das Gitter 14 angeschweißt bzw. -gelötet.

Insbesondere im Bereich der Ablenkelemente 22 sind die Kanten des Mischelements 10 scharfkantig ausgebildet, was z.B. dadurch erreicht werden kann, daß nach dem Stanzen keine spanende Nachbearbeitung stattfindet.

Entweder vor oder nach dem Zusammensetzen der ersten und der zweiten Stege 16, 18 zum Gitter 14 werden die Ablenkelemente 22, die trapezförmig ausgebildet sind und sich in Richtung vom Gitter 14 weg verjüngen, aus der Gitterebenen-Normalen N in Reihenlängsrichtung L um 10° bis 60°, hier vorzugsweise etwa 45°, gebogen, so daß beim fertigen Mischelement 10 die Ablenkelemente 22 gegenüber der Gitterebenen-Normalen N geneigt sind. Dabei sind sämtliche Ablenkelemente 22 einer Reihe 20a, 20b gleichsinnig geneigt und haben zudem den gleichen Neigungswinkel α zur Gitterebenen-Normalen N. In einer alternativen, nicht gezeigten Ausgestaltung können die Ablenkelemente in einem Randbereich des Gitters 14 einen anderen Neigungswinkel aufweisen als die Ablenkelemente in einem mittleren Bereich.

Wie aus Figur 1 hervorgeht, sind die Ablenkelemente 22 der beiden unmittelbar nebeneinanderliegenden ersten Reihen 20a, die hier die mittleren Reihen bilden, gleichsinnig geneigt, und die Ablenkelemente 22 der an die ersten Reihen 20a angrenzenden zweiten Reihen 20b (hier die äußeren Reihen) sind dazu gegensinnig geneigt. Insbesondere sind je zwei (senkrecht zur Reihenlängsrichtung L) nebeneinanderliegende Ablenkelemente 22 der ersten Reihen 20a parallel zueinander ausgerichtet. Die gegenläufige Neigung der Ablenkelemente 22 in den ersten und zweiten Reihen wird dadurch erreicht, daß, bezogen auf die Darstellung in Figur 2, die beiden mittleren Ablenkelemente 22 (die zu den ersten Reihen 20a gehören) z.B. aus der Zeichenebene heraus und die beiden angrenzenden äußeren Ablenkelemente 22 in die Zeichenebene hinein gebogen werden.

In der gezeigten Ausgestaltung weist das Gitter 14 genau zwei mittlere bzw. erste Reihen 20a auf, es können jedoch auch mehr erste Reihen 20a sein, deren Ablenkelemente 22 gleichsinnig geneigt sind. Entscheidend ist lediglich, daß mehrere erste Reihen 20a mit gleichsinnig geneigten Ablenkelementen 22 unmittelbar nebeneinander angeordnet sind und an ihrem äußeren Rand an wenigstens eine, ggf. auch mehrere äußere Reihe(n) 20b angrenzen, die dazu gegensinnig geneigt sind. Zu betonen ist auch, daß die Ablenkelemente 22 gegenüber dem Gitter 14 nach stromabwärts abstehen.

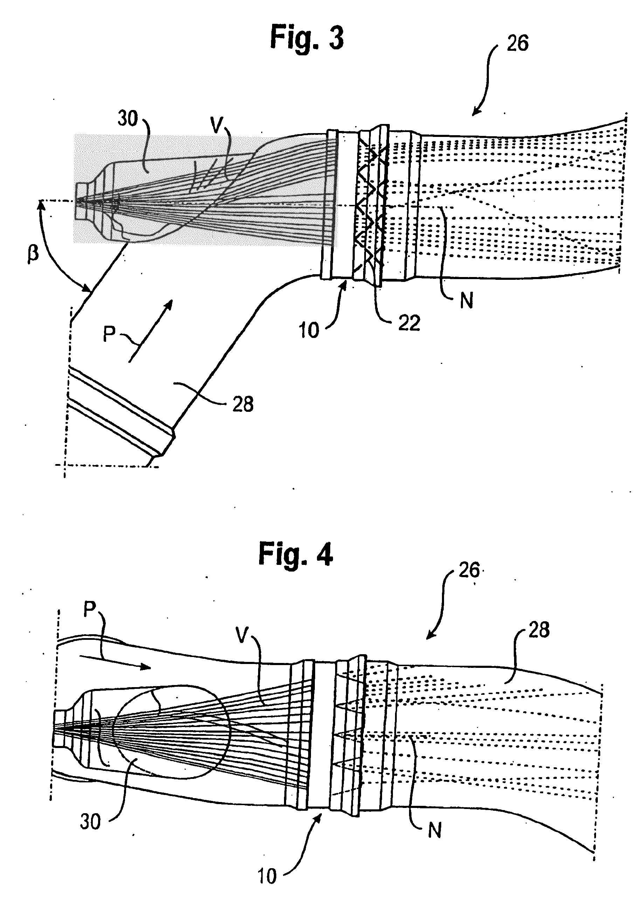

Die Figuren 3 und 4 zeigen ausschnittsweise eine erfindungsgemäße Abgasanlage 26 für eine Verbrennungskraftmaschine, insbesondere einen Kraftfahrzeugmotor, die ein abgasdurchströmtes Rohr 28 sowie eine Zuführeinrichtung 30 für ein Reduktionsmittel, hier wäßrige Harnstofflösung, aufweist. Bezüglich der durch den Pfeil P angedeuteten Strömungsrichtung des Abgases stromabwärts der Zuführeinrichtung 30 ist das Mischelement 10 angeordnet, wobei die Ablenkelemente 22 auf der stromabwärtigen Seite des Gitters 14 positioniert sind. Die Gitterebenen-Normale N fällt auf der stromabwärtigen Seite mit der Längsachse des Rohres 28 zusammen. Stromabwärts des Mischelements 10 ist ein in den Figuren nicht gezeigter SCR-Katalysator vorgesehen.

Stromaufwärts des Mischelements 10, also auf der den Ablenkelementen 22 abgewandten Seite, ist das Rohr 28 gegenüber der Gitterebenen-Normalen N um 15° bis 60° (Winkel β) abgewinkelt, hier um etwa 45°. Wie aus Figur 3 hervorgeht, ist das Rohr 28 längs der Reihen 20a, 20b abgewinkelt, das heißt, das Abgas trifft in etwa senkrecht auf die in der Figur nach unten weisenden Ablenkelemente 22 der ersten Reihen 20a. Die Zuführung des Reduktionsmittels hingegen erfolgt unter einem Winkel zwischen 15° und 60° zur Zuströmrichtung des Abgases.

Im Betrieb wird zur Reduktion von im Abgas enthaltenen Stickoxiden über die Zuführeinrichtung 30 wäßrige Harnstofflösung (Verteilungsbahnen V) eingebracht, die durch das Mischelement 10 fein verteilt und verdampft wird. Um die Verdampfung der Harnstofflösung und die Umwandlung in Ammoniak zu begünstigen, können die Ablenkelemente 22 bzw. das gesamte Mischelement 10 eine katalytisch aktive Beschichtung aufweisen (nicht gezeigt).

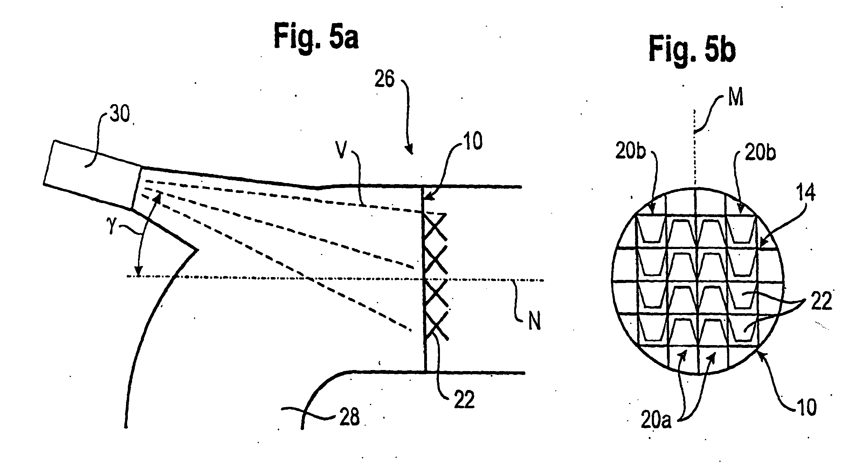

Die Figuren 5a und 5b zeigen noch einmal schematisch eine gegenüber den Figuren 3 und 4 geringfügig modifizierte Abgasanlage 26 sowie die Ausrichtung des zugehörigen Mischelements 10, das demjenigen der Figur 1 entspricht. Dieses Mischelement 10 ist insbesondere auch bei nicht axialer Zuführung des Reduktionsmittels geeignet (die Zuführung des Reduktionsmittels erfolgt hier unter einem Winkel γ zur Gitterebenen-Normalen N).

Zusammenfassend läßt sich festhalten, daß die Mischelemente 10 der Figuren 1 bzw. 5 achsensymmetrisch zu wenigstens einer Mittelachse ausgebildet sind.

## Patentansprüche

1. Mischelement, insbesondere zur Anordnung in einer Abgasanlage (26) einer Verbrennungskraftmaschine, mit
einem Gitter (14), das mehrere zueinander parallele Reihen (20a, 20b) aufweist, und
mehreren vom Gitter (14) abstehenden Ablenkelemente (22), die gegenüber der Gitterebenen-Normalen (N) geneigt sind,
wobei sämtliche Ablenkelemente (22) einer Reihe (20a, 20b) gleichsinnig geneigt sind,
die Ablenkelemente (22) wenigstens zweier unmittelbar nebeneinanderliegender erster Reihen (20a) gleichsinnig geneigt sind und die Ablenkelemente (22) der an die ersten Reihen (20a) angrenzenden Reihen (20b) zu denen der ersten Reihen (20a) gegensinnig geneigt sind.

2. Mischelement nach Anspruch 1, **dadurch gekennzeichnet, daß** die nebeneinanderliegenden Ablenkelemente (22) der ersten Reihen (20a) parallel zueinander ausgerichtet sind.

3. Mischelement nach Anspruch 1 oder 2, **dadurch gekennzeichnet, daß** es sich bei den ersten Reihen (20a) um mittlere Reihen handelt.

4. Mischelement nach Anspruch 1 oder 2, **dadurch gekennzeichnet, daß** es sich bei den ersten Reihen (20a) um Reihen handelt, die auf derselben Seite einer parallel zur Reihenlängsrichtung verlaufenden Mittelachse (M) angeordnet sind.

5. Mischelement nach einem der Ansprüche 1 bis 4, **dadurch gekennzeichnet, daß** die Ablenkelemente (22) in Reihenlängsrichtung (L) geneigt sind oder senkrecht zur Reihenlängsrichtung (L) geneigt sind.

6. Mischelement nach den Ansprüchen 4 und 5, **dadurch gekennzeichnet, daß** die freien Enden der Ablenkelemente (22) zur Mittelachse (M) hin zeigen oder von der Mittelachse (M) weg zeigen.

7. Mischelement nach einem der vorhergehenden Ansprüche, **dadurch gekennzeichnet**, das das Gitter (14) genau zwei erste Reihen (20a) aufweist.

8. Mischelement nach einem der vorhergehenden Ansprüche, **dadurch gekennzeichnet, daß** sämtliche Ablenkelemente (22) einer Reihe (20a, 20b) den gleichen Neigungswinkel (α) aufweisen.

9. Mischelement nach einem der vorhergehenden Ansprüche, **dadurch gekennzeichnet, daß** es achsensymmetrisch zu einer parallel zur Reihenlängsrichtung (L) verlaufenden Mittelachse (M, H) ausgebildet ist.

10. Mischelement nach einem der vorhergehenden Ansprüche, **dadurch gekennzeichnet, daß** die Ablenkelemente (22) zwischen 10° und 60°, vorzugsweise etwa 45°, zur Gitterebenen-Normalen (N) geneigt sind.

11. Mischelement nach einem der vorhergehenden Ansprüche, **dadurch gekennzeichnet, daß** die Ablenkelemente (22) als Metallstanzteile ausgebildet sind und dass vorzugsweise die Kanten der Ablenkelemente (22) scharfkantig, ohne spanende Nachbearbeitung nach dem Stanzen ausgeführt sind.

12. Mischelement nach einem der vorhergehenden Ansprüche, **dadurch gekennzeichnet, daß** sich die Ablenkelemente (22) In Richtung vom Gitter (14) weg verjüngen.

13. Mischelement nach einem der vorhergehenden Ansprüche, **dadurch gekennzeichnet, daß** die Länge der Ablenkelemente (22) im wesentlichen der Breite der Reihen (20a, 20b) entspricht.

14. Abgasanlage für eine Verbrennungskraftmaschine, mit einem abgasdurchströmten Rohr (28), einer Zuführeinrichtung (30) für ein Reduktionsmittel sowie einem Mischelement (10) nach einem der vorhergehenden Ansprüche.

15. Abgasanlage nach Anspruch 14, **dadurch gekennzeichnet, daß** das Rohr (28) Stromaufwärts des Mischelements (10) gegenüber der Gitterebenen-Normalen (N) zwischen 15° und 60° abgewinkelt ist und/oder die Zuführung des Reduktionsmittels unter einem Winkel zwischen 15° und 60° zur Zuströmrichtung des Abgases erfolgt.

## Claims

1. A mixing element, in particular for arrangement in an exhaust system (26) of an internal combustion engine, comprising
a grid (14) which includes a plurality of rows (20a, 20b) parallel to each other,
and
a plurality of deflector elements (22) which project from the grid (14) and are inclined in relation to the grid plane normal (N),
all of the deflector elements (22) of one row (20a, 20b) being inclined in the same direction,
the deflector elements (22) of at least two immediately adjacent first rows (20a) being inclined in the same direction, and the deflector elements (22) of the rows (20b) adjacent to the first rows (20a) being inclined in the opposite direction to those of the first rows (20a).

2. The mixing element according to claim 1, **characterized in that** the adjacent deflector elements (22) of the first rows (20a) are oriented parallel to each other.

3. The mixing element according to claim 1 or 2, **characterized in that** the first rows (20a) are middle rows.

4. The mixing element according to claim 1 or 2, **characterized in that** the first rows (20a) are rows which are arranged on the same side of a center axis (M) extending parallel to the longitudinal direction of the rows.

5. The mixing element according to any of claims 1 to 4, **characterized in that** the deflector elements (22) are inclined in the longitudinal direction (L) of the rows or are inclined perpendicularly to the longitudinal direction (L) of the rows.

6. The mixing element according to claims 4 and 5, **characterized in that** the free ends of the deflector elements (22) point towards the center axis (M) or point away from the center axis (M).

7. The mixing element according to any of the preceding claims, **characterized in that** the grid (14) includes exactly two first rows (20a).

8. The mixing element according to any of the preceding claims, **characterized in that** all of the deflector elements (22) of one row (20a, 20b) have the same angle of inclination (α).

9. The mixing element according to any of the preceding claims, **characterized in that** it is designed to be axially symmetrical to a center axis (M, H) extending parallel to the longitudinal direction (L) of the rows.

10. The mixing element according to any of the preceding claims, **characterized in that** the deflector elements (22) are inclined between 10 degrees and 60 degrees, preferably approximately 45 degrees, to the grid plane normal (N).

11. The mixing element according to any of the preceding claims, **characterized in that** the deflector elements (22) are in the form of stamped metal parts and that, preferably, the deflector elements (22) are made to have sharp edges and without a finishing machining step after the stamping process.

12. The mixing element according to any of the preceding claims, **characterized in that** the deflector elements (22) are tapered in the direction away from the grid (14).

13. The mixing element according to any of the preceding claims, **characterized in that** the length of the deflector elements (22) substantially corresponds to the width of the rows (20a, 20b).

14. An exhaust system for an internal combustion engine, comprising a tube (28) through which exhaust gas flows, a supply means (30) for a reducing agent, and a mixing element (10) according to any of the preceding claims.

15. The exhaust system according to claim 14, **characterized in that** upstream of the mixing element (10), the tube (28) is angled between 15 degrees and 60 degrees in relation to the grid plane normal (N) and/or the reducing agent is supplied at an angle of between 15 degrees and 60 degrees in relation to the inflow direction of the exhaust gas.

## Revendications

1. Elément mélangeur, en particulier pour l'agencement dans une installation de gaz d'échappement (26) d'une machine à combustion interne, comportant
une grille (14) présentant une pluralité de rangées (20a, 20b) parallèles les unes aux autres, et
une pluralité d'éléments déflecteurs (22) qui font saillie de la grille (14) et qui sont inclinés par rapport à la normale (N) du plan de la grille,
tous les éléments déflecteurs (22) d'une rangée (20a, 20b) étant inclinés dans le même sens,
les éléments déflecteurs (22) d'au moins deux premières rangées (20a) directement adjacentes étant inclinés dans le même sens, et les éléments déflecteurs (22) des rangées (20b) adjacentes aux premières rangées (20a) étant inclinés en sens inverse par rapport à ceux des premières rangées (20a).

2. Elément mélangeur selon la revendication 1, **caractérisé en ce que** les éléments déflecteurs (22) adjacents des premières rangées (20a) sont orientés de façon parallèle les uns par rapport aux autres.

3. Elément mélangeur selon la revendication 1 ou 2, **caractérisé en ce que** les premières rangées (20a) sont des rangées médianes.

4. Elément mélangeur selon la revendication 1 ou 2, **caractérisé en ce que** les premières rangées (20a) sont des rangées qui sont agencées du même côté d'un axe médian (M) s'étendant parallèlement à la direction longitudinale des rangées.

5. Elément mélangeur selon l'une des revendications 1 à 4, **caractérisé en ce que** les éléments déflecteurs (22) sont inclinés en direction longitudinale (L) des rangées ou sont inclinés perpendiculairement à la direction longitudinale (L) des rangées.

6. Elément mélangeur selon les revendications 4 et 5, **caractérisé en ce que** les extrémités libres des éléments déflecteurs (22) sont tournées vers l'axe médian (M) ou sont orientées à l'opposé de l'axe médian (M).

7. Elément mélangeur selon l'une des revendications précédentes, **caractérisé en ce que** la grille (14) comporte exactement deux premières rangées (20a).

8. Elément mélangeur selon l'une des revendications précédentes, **caractérisé en ce que** tous les éléments déflecteurs (22) d'une rangée (20a, 20b) ont un angle d'inclinaison (α) identique.

9. Elément mélangeur selon l'une des revendications précédentes, **caractérisé en ce qu'**il est réalisé axisymétrique par rapport à un axe médian (M, H) s'étendant parallèlement à la direction longitudinale (L) des rangées.

10. Elément mélangeur selon l'une des revendications précédentes, **caractérisé en ce que** les éléments déflecteurs (22) sont inclinés avec un angle entre 10° et 60°, de préférence d'environ 45° par rapport à la normale (N) du plan de la grille.

11. Elément mélangeur selon l'une des revendications précédentes, **caractérisé en ce que** les éléments déflecteurs (22) sont réalisés sous forme de pièces métalliques estampées et **en ce que** les arêtes des éléments déflecteurs (22) sont de préférence réalisées à angles vifs sans finissage par enlèvement de copeaux après l'estampage.

12. Elément mélangeur selon l'une des revendications précédentes, **caractérisé en ce que** les éléments déflecteurs (22) se rétrécissent dans une direction opposée à la grille (14).

13. Elément mélangeur selon l'une des revendications précédentes, **caractérisé en ce que** la longueur des éléments déflecteurs (22) correspond sensiblement à la largeur des rangées (20a, 20b).

14. Installation de gaz d'échappement pour une machine à combustion interne, comportant un tube (28) traversé par les gaz d'échappement, un dispositif d'alimentation (30) pour un agent de réduction, ainsi qu'un élément mélangeur (10) selon l'une des revendications précédentes.

15. Installation de gaz d'échappement selon la revendication 14, **caractérisé en ce qu'**en amont de l'élément mélangeur (10), le tube (28) est coudé avec un angle entre 15° et 60° par rapport à la normale (N) du plan de la grille et/ou l'alimentation de l'agent de réduction a lieu sous un angle entre 15° et 60° par rapport à la direction d'admission des gaz d'échappement.
